# EUROPEAN PATENT APPLICATION

(11) **EP 1 656 982 A1**
(43) Date of publication of application: **17.05.2006**
(21) Application number: 05023850.0
(22) Date of filing: 02.11.2005
(51) Int. Cl.: B01D 46/10, B01D 39/16

(54) **Composite filter construction**

(30) Priority: 04.11.2004 IT MI20042117
(71) Applicant: TELA S.r.l., 20090 Trezzano sul Naviglio MI (IT)
(72) Inventor: Poletti, Mario, 20090 Trezzano sul Naviglio Milano (IT)
(74) Representative: Cicogna, Franco

(57) **Abstract**

A composite filter construction comprises a first open-cell foamed polyurethane layer (2), with a middle layer (3) comprising polyester fibers and polypropylene microfibers, a second layer (4), coupled to the middle layer (3), comprising a non-woven polypropylene fabric material, and a polyurethane material gasket (5) co-molded on said layers.

## Description

### BACKGROUND OF THE INVENTION

The present invention relates to a composite filter construction, which can be used in internal combustion engines for motor vehicles, vacuum cleaners and so on.

As is known, internal combustion engines are conventionally provided with an air filter, arranged on the engine inlet tube, upstream of the carburetor or injection system.

The most common type of filter herein used is a dry filter including a filtering cartridge comprising either one or more special paper layers and being housed in a filter holder casing.

Also known are filtering cartridges comprising materials different from paper and optionally impregnated with an oil having filtering and duration characteristics better than those of paper filters, but which have the drawback of a comparatively high cost.

### SUMMARY OF THE INVENTION

Accordingly, the aim of the present invention is to provide a composite filter construction, of a cartridge type, which is improved with respect to prior cartridge filters.

Within the scope of the above mentioned aim, a main object of the invention is to provide such a filter construction which has a low load loss, much smaller than that of prior filtering cartridges.

Another object of the present invention is to provide such a filter construction which has a larger duration useful life, a high filtering capability and which allows to restrain powders of a size less than 4-5 micrometers.

Yet another object of the present invention is to provide such a filter construction which can be washed and cleaned to extend its operating efficiency.

According to one aspect of the present invention, the above mentioned aim and objects, as well as yet other objects, which will become more apparent hereinafter, are achieved by a composite filter construction, characterized in that said composite filter construction comprises a first open-cell foamed polyurethane layer and a middle layer comprising polyester fibers and polypropylene microfibers.

A second layer is coupled to the middle layer, said second layer comprising a polypropylene non-woven fabric material, and a polyurethane material gasket being co-molded on said layers.

### BRIEF DESCRIPTION OF THE DRAWINGS

Further characteristics and advantages of the present invention will become more apparent hereinafter from the following detailed disclosure of a preferred, though not exclusive, embodiment of the invention which is illustrated, by way of an indicative, but not limitative, example in the accompanying drawings, where:

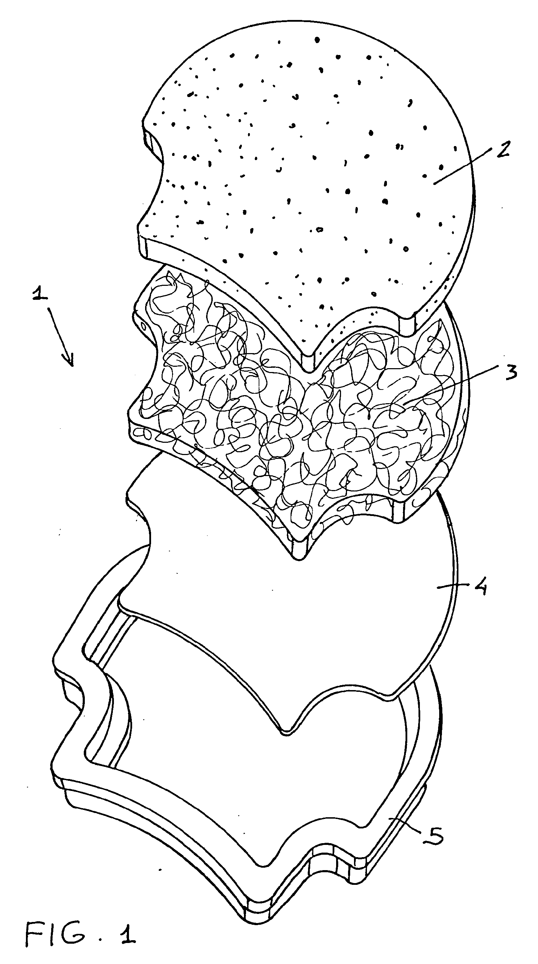

Figure 1 is an exploded perspective view of a filter construction according to the invention;

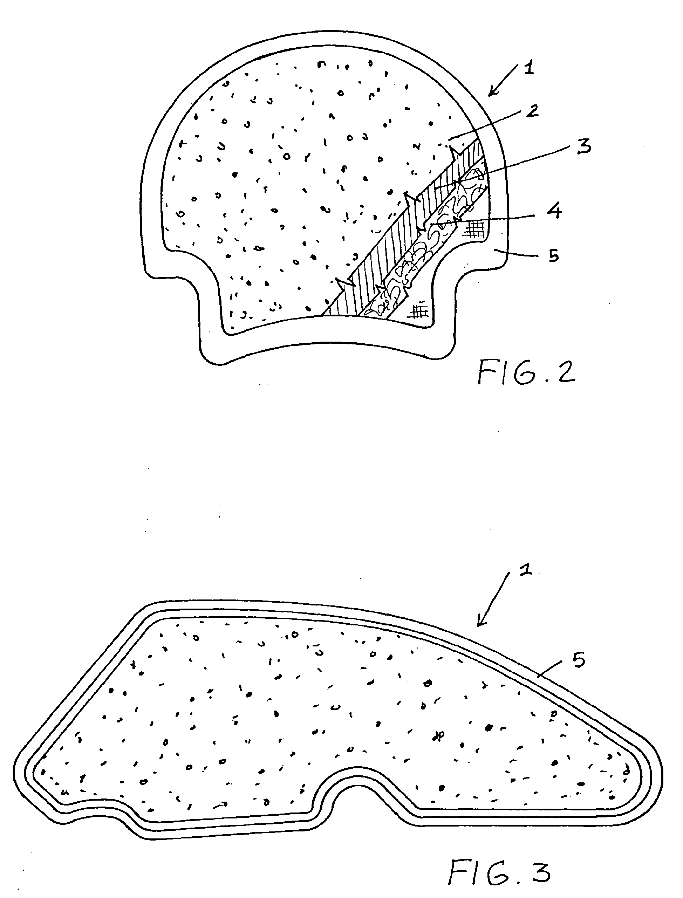

Figure 2 is a top plan view, as partially broken away, of that same filter construction;
Figure 3 is a further top plan view of a further filter construction according to the invention;

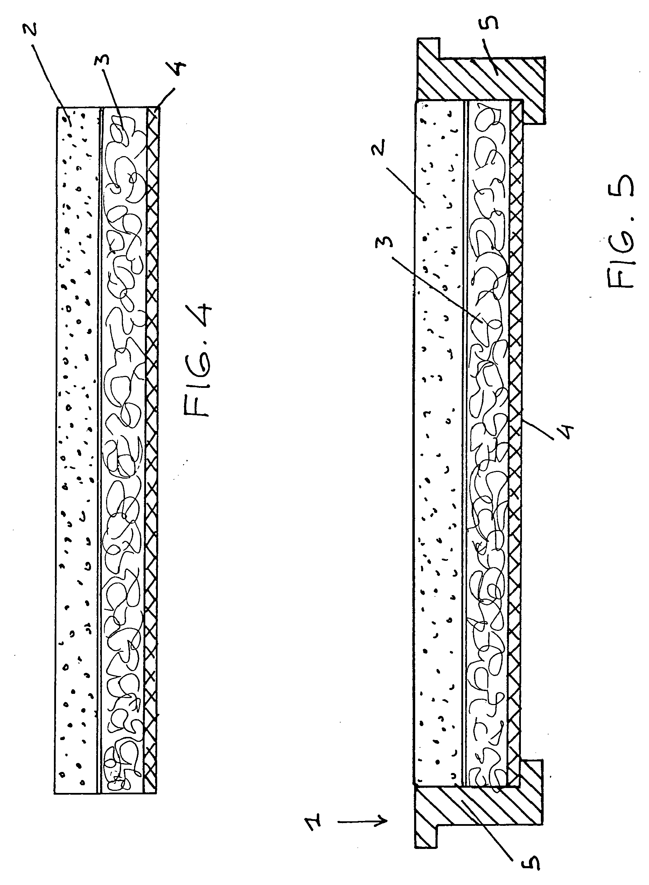

Figure 4 is an elevation view, in cross-section, of a filtering body of the inventive filter construction; and
Figure 5 is a further elevation view, in cross-section, of the filter construction according to the invention.

### DESCRIPTION OF THE PREFERRED EMBODIMENT

With reference to the number references of the above mentioned figures, the filter construction according to the present invention, which has been generally indicated by the reference number 1, comprises: a first layer 2, a middle layer 3, a second layer 4 coupled to said middle layer, and a gasket 5.

The first layer 2 comprises open-cell foamed polyurethane (for example at 60 ppi), of a self-extinguishing type.

The middle layer 3 comprises polyester fibers and polypropylene microfibers, and is of a self-extinguishing type too.

Preferably, the two layers 2 and 3 are coupled by a water-based polyurethane glue material.

The second layer 4 comprises a polypropylene non-woven fabric material, of about 30 g/m².

The thus made filtering construction or assembly is arranged in a mold and about said filtering assembly is poured a self-extinguishing polyurethane material forming a filter gasket 5.

Then, the filter is impregnated by a mineral "no-drop" oil, operating for providing the filter with an improved fine powder restraining capability.

The thus made filter construction forms a cartridge filtering body which can be arranged in a suitable filter casing, as provided in internal combustion engines for motor vehicles or other applications.

The filter construction according to the present invention can be also advantageously used in vacuum cleaners and the like.

It has been found that the invention fully achieves the intended aim and objects.

In fact, the invention provides a composite filter construction, having a low load loss and a long useful life.

The filtering capability of the inventive filtering construction, moreover, is very high and allows to restrain or trap powders of a size less than 4-5 micrometers.

Moreover, the subject filter construction can be washed by water and organic solvents, and can be cleaned by pressurized air jets, thereby providing the filter construction with a long duration operating efficiency.

In practicing the invention, the used materials, and the contingent size and shapes, can be any, according to requirements.

## Claims

1. A composite filter construction, **characterized in that** said composite filter construction comprises a first layer of open-cell foamed polyurethane, a middle layer comprising polyester fibers and polypropylene microfibers, a second layer, coupled to said middle layer, comprising a polypropylene non-woven fabric material, and a polyurethane material gasket co-molded on said layers.

2. A composite filter construction, according to claim 1, **characterized in that** said layers are impregnated with an oil.

3. A composite filter construction, according to claim 2, **characterized in that** said oil is a no-drop mineral oil.

4. A composite filter construction, according to one or more of the preceding claims, **characterized in that** said first layer comprises a self-extinguishing open-cell 60 ppi foamed polyurethane.

5. A composite filter construction, according to one or more of the preceding claims, **characterized in that** said middle layer is a self-extinguishing middle layer.

6. A composite filter construction, according to one or more of the preceding claims, **characterized in that** said layers are coupled to one another by a water based polyurethane glue.

7. A composite filter construction, according to one or more of the preceding claims, **characterized in that** said second layer comprises a polypropylene non-woven fabric material of about 30 g/m².

8. A composite filter construction, according to one or more of the preceding claims, **characterized in that** said gasket is made of a self-extinguishing polyurethane material.

9. A composite filter construction, according to one or more of the preceding claims, **characterized in that** the filtering assembly of said construction, comprising said first, second and middle layers, is arranged in a mold and about it is poured a self-extinguishing polyurethane material forming said gasket.

10. A composite filter construction, according to one or more of the preceding claims, **characterized in that** said composite filter construction comprises one or more of the disclosed and/or illustrated characteristics.
